# EUROPÄISCHE PATENTANMELDUNG

(11) **EP 3 556 583 A1**
(43) Veröffentlichungstag der Anmeldung: **23.10.2019**
(21) Anmeldenummer: 19020299.4
(22) Anmeldetag: 18.04.2019
(51) Int. Cl.: B60G 21/055, B62D 21/11

(54) **VERFAHREN ZUM HERSTELLEN VON FAHRSCHEMELN**

(30) Priorität: 18.04.2018 LU 100771
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Verfahren zum Herstellen von Fahrschemeln. Das Verfahren beinhaltet das Herstellen von Fahrschemelkomponenten (1), die jeweils zwei mittels einer Quertraverse (2) verbindbare Seitenträger (3) aufweisen. Das Verfahren beinhaltet außerdem Bereitstellen von Quertraversen zweier unterschiedlicher Arten, nämlich einer ersten Art von Quertraversen (4), die jeweils als Hohlkörper ausgebildet sind, in dem wenigstens eine Komponente (5) einer aktiven Fahrwerksbeeinflussungsvorrichtung angeordnet ist, und einer zweiten Art von Quertraversen (18), die keine Komponente (5) einer aktiven Fahrwerksbeeinflussungsvorrichtung aufweist. Es wird eine der Quertraverse (4, 18) in jeweils eine der Fahrschemelkomponenten (1) derart eingebaut, dass die eingefügte Quertraverse (4, 18) die zwei Seitenträger (3) verbindet, wobei in Abhängigkeit davon, ob der Fahrschemel für ein Fahrzeug mit aktivem Fahrwerk oder für ein Fahrzeug mit rein passivem Fahrwerk bestimmt ist, entweder eine Quertraverse (4) der ersten Art oder eine Quertraverse (18) der zweiten Art eingefügt wird.

## Beschreibung

Die Erfindung betrifft ein Verfahren zum Herstellen von Fahrschemeln.

Die Erfindung betrifft außerdem einen Fahrschemel. Die Erfindung betrifft darüber hinaus ein Fahrwerk mit einem Fahrschemel und ein Fahrzeug mit einem Fahrschemel.

Ein Fahrschemel eines Fahrzeuges trägt zumeist außer diversen antriebstechnischen Komponenten (Verbrennungsmotor, Getriebe, Differential) auch die Querlenker des Fahrwerkes. Durch die vielfältigen mechanischen Belastungen, insbesondere mehraxiale Kräfte und Schwingungen, ist es nötig, den Fahrschemel als tragendes Fahrzeugelement auszulegen, das besonders im Vorderwagenbereich die Aussteifung, insbesondere in lateraler Richtung, übernimmt oder zumindest unterstützt. Fahrschemel, die bei Kraftfahrzeugen, insbesondere Personenkraftfahrzeugen, verwendet werden, haben häufig die Grundform eines innen offenen Rechtecks oder Trapezes. Ein Fahrschemel kann zusätzliche, insbesondere in den Motorraum ragende, Abschnitte aufweisen, um Baueinheiten an dem Fahrschemel befestigen zu können.

Aus DE 10 2013 011 562 A1 ist ein Hilfsrahmen für ein Kraftfahrzeug zur Anlenkung von Radaufhängungselementen und eines in der Fahrzeugquerrichtung verlaufenden Stabilisators bekannt. Der Hilfsrahmen weist seitlichen in der Fahrzeuglängsrichtung verlaufende Längsträger und zumindest einem Querträger auf, der die beiden Längsträger in der Fahrzeugquerrichtung verbindet. Der Querträger ist ein Hohlprofilteil, dessen Hohlprofil eine Stabilisatorgasse bildet, in der der Stabilisator zwischen den beiden Längsträgern verläuft. Zeitlich nach der Herstellung des Hilfsrahmens wird der Stabilisator montiert. Der nachträglich zu montierende Stabilisator kann in einer Ausführungsform ein einteiliger, U-förmiger Querstabilisator sein, der sich durchgängig in der Fahrzeugquerrichtung zwischen den beiden Fahrzeugseiten erstreckt und mittelbar oder unmittelbar an Radführungselementen einer Radaufhängung angelenkt ist. Alternativ kann der Stabilisator in eine aktive Fahrwerksregelung eingebunden sein, bei der zumindest ein elektrisch ansteuerbarer Drehaktuator den Stabilisator mit einem zusätzlichen Torsionsmoment beaufschlagen kann.

Bei Fahrzeugen, die eine aktive Fahrwerkstabilisierung, insbesondere eine Wank- und/oder Nickstabilisierung, aufweisen, sind einige Komponenten der aktiven Fahrwerksbeeinflussungsvorrichtung in Form einer separaten Baueinheit oder mehrerer separater Baueinheiten zumeist ebenfalls am vorderen und/oder hinteren Fahrschemel befestigt.

Aktive Stabilisierungssysteme, insbesondere zur Verbesserung des Wankverhaltens bei Kurvenfahrten und/oder zum Vermeiden oder Reduzieren von Nickbewegungen beim Anfahren oder Bremsen, sind in unterschiedlichsten Ausführungsformen bekannt.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangenhälften gegeneinander verdreht, um einer durch die Zentrifugalkraft bewirkten Seitneigung des Fahrzeuges entgegen zu wirken. Hierbei wird das jeweils kurvenäußere Rad einer Achse mit einer zusätzlichen Kraft in Richtung Fahrbahn beaufschlagt, während das kurveninnere Rad mit einer von der Fahrbahn weg gerichteten Kraft beaufschlagt wird.

Aus DE 10 2005 031 036 A1 ist ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch eine Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der Schwenkbewegung der Stabilisatorteile entkoppelt gelagert ist.

Außer dem vorgenannten Typ von Stabilisatorsystemen gibt es auch Systeme mit mehreren Aktuatoren, bei denen jeweils ein Aktuator ausschließlich einer Radaufhängung zugeordnet ist. Bei einem solchen System kann der Höhenstand eines Rades relativ zur Karosserie unabhängig von der Einstellung bei einem anderen Rad, insbesondere unabhängig vom Höhenstand des Rades derselben Fahrzeugachse, eingestellt werden. Ein solches System hat den Vorteil, dass die Räder einer Fahrzeugachse mit gleichgerichteten Kräften und/oder Drehmomenten beaufschlagt werden können, um beispielsweise einer Nickbewegung beim Anfahren und/oder Bremsen entgegenwirken zu können. Ein solches System ist beispielsweise aus DE 10 2010 037 180 A1 und aus DE 10 2010 037 555 A1 bekannt.

Es ist die Aufgabe der vorliegenden Erfindung, ein Verfahren zum Herstellen von Fahrschemeln anzugeben, das flexibel im Hinblick auf Fahrzeuge mit und ohne aktiver Fahrwerksbeeinflussungsvorrichtung einsetzbar ist und das es insbesondere im Hinblick auf Fahrzeuge mit aktiver Fahrwerksbeeinflussungsvorrichtung ermöglicht, Bauraum in einem Fahrzeug einzusparen.

Die Aufgabe wird durch ein Verfahren gelöst, das gekennzeichnet ist, durch folgende Schritte:
a. Herstellen von Fahrschemelkomponenten, die jeweils zwei mittels einer Quertraverse verbindbare Seitenträger aufweisen,
b. Bereitstellen von Quertraversen zweier unterschiedlicher Arten, nämlich
   i. einer ersten Art von Quertraversen, die jeweils als Hohlkörper ausgebildet sind, in dem wenigstens eine Komponente einer aktiven Fahrwerksbeeinflussungsvorrichtung angeordnet ist und
   ii. einer zweiten Art von Quertraversen, die keine Komponente einer aktiven Fahrwerksbeeinflussungsvorrichtung aufweist,
c. Einfügen einer der Quertraversen in jeweils eine der Fahrschemelkomponenten derart, dass die eingefügte Quertraverse die zwei Seitenträger verbindet, wobei in Abhängigkeit davon, ob der Fahrschemel für ein Fahrzeug mit aktivem Fahrwerk oder für ein Fahrzeug mit rein passivem Fahrwerk bestimmt ist, entweder eine Quertraverse der ersten Art oder eine Quertraverse der zweiten Art eingefügt wird.

Die Erfindung hat den ganz besonderen Vorteil, dass Fahrschemel flexibel und bedarfsbezogen herstellbar sind, wobei vorteilhafter Weise stets die gleiche Fahrschemelkomponente, die jeweils zwei mittels einer ersten Quertraverse verbundene Seitenträger aufweist, verwendet werden kann, um entweder einen Fahrschemel für ein Fahrzeug mit aktiver Fahrwerksbeeinflussungsvorrichtung oder einen Fahrschemel für ein Fahrzeug ohne aktive Fahrwerksbeeinflussungsvorrichtung herzustellen.

Im Hinblick auf Fahrzeuge mit aktiver Fahrwerksbeeinflussungsvorrichtung hat die Erfindung den ganz besonderen Vorteil, dass durch die Funktionsintegration zweier bislang vollkommen unterschiedlicher Bauteile sehr viel Bauraum eingespart wird. Hierbei kann in ganz besonders vorteilhafter Weise vorgesehen sein, dass jede Quertraverse der ersten Art ein in sich stabiles, insbesondere verwindungssteifes und/und oder biegesteifes Gehäuse bildet, das einerseits wenigstes eine Komponente einer aktiven Fahrwerksbeeinflussungsvorrichtung einhaust und andererseits als aussteifender und/oder tragender und/oder stabilisierender Bestandteil des Fahrschemels fungiert. Durch die Erfindung ist insoweit vorteilhaft erreicht, dass Komponenten der Fahrwerksbeeinflussungsvorrichtung nicht mehr außen an dem Fahrschemel befestigt werden müssen, sondern innerhalb des Fahrschemels angeordnet werden, wodurch Bauraum eingespart und eine kompakte Bauweise erzielt wird.

Bei einer besonderen Ausführung werden die Seitenträger beim Herstellen der Fahrschemelkomponenten jeweils mittels einer Primärquertraverse verbunden. Danach erfolgt das Verbinden der Seitenträger der derart zuvor hergestellten Fahrschemelkomponente entweder mittels einer Quertraverse der ersten Art oder mittels einer Quertraverse der zweiten Art; je nachdem, ob der Fahrschemel für ein Fahrzeug mit aktivem Fahrwerk oder für ein Fahrzeug mit rein passivem Fahrwerk bestimmt ist. Ein solcher Fahrschemel ist besonders robust und kann beispielsweise die Form eines innen offenen Rechtecks oder Trapezes oder Quadrats aufweisen.

Die Erfindung hat den weiteren ganz besonderen Vorteil, dass die wenigstens eine Komponente einer aktiven Fahrwerksbeeinflussungsvorrichtung sehr viel einfacher und weniger aufwändig in den Hohlkörper der Quertraverse eingebaut werden kann, solange er noch nicht an der Fahrschimmelkomponente befestigt ist, weil der unbefestigte Hohlkörper von allen Seiten zugänglich ist und für den Einbau der Komponente einer aktiven Fahrwerksbeeinflussungsvorrichtung leichter bewegt und ausgerichtet werden kann. Insoweit ist erfindungsgemäß vorzugsweise vorgesehen, dass zunächst die Quertraversen hergestellt werden und erst zeitlich danach das Einfügen einer der Traversen in die jeweilige Fahrschemelkomponenten erfolgt. In Bezug auf die ersten Art von Quertraversen bedeutet dies, dass die wenigstens eine Komponente einer aktiven Fahrwerksbeeinflussungsvorrichtung in dem Hohlkörper der Quertraverse montiert wird, bevor die Quertraverse in eine Fahrschemelkomponente eingefügt wird. Nach einem besonderen Erfindungsgedanken kann auch die zweite Art von Quertraversen vorteilhaft zeitlich vor dem Einfügen in eine Fahrschemelkomponente mit einer passiven Fahrwerksbeeinflussungsvorrichtung, beispielsweise einer Drehstabfeder, die an ihren Enden jeweils einen Hebelarm aufweist, ausgerüstet werden.

Insbesondere kann vorteilhaft vorgesehen sein, dass die Fahrschemelkomponenten bevor die Quertraverse montiert wird jeweils außer der Primärquertraverse keinen weiteren Träger, insbesondere keine weitere Quertraversen, aufweisen, die die Seitenträger verbinden. Eine solche Ausführung kommt einerseits mit wenigen tragenden Bauteilen aus und ist dennoch sehr stabil.

Darüber hinaus kann vorteilhaft vorgesehen sein, dass außer der Quertraverse keine weitere Quertraverse, die die Seitenträger verbindet, an der Fahrschemelkomponente befestigt wird.

Bei einer besonderen Ausführung des Verfahrens wird jeweils die Quertraverse mit der Fahrschemelkomponente durch Schraubverbindungen oder ausschließlich durch Schraubverbindungen verbunden. Diese Vorgehensweise ist besonders flexibel und erlaubt es sogar, bereits hergestellte Fahrschemel auf einfache Weise und zerstörungsfrei umzurüsten, indem die Quertraverse abgeschraubt und durch eine Quertraverse der jeweils anderen Art ersetzt wird. Auf diese Weise kann auch die Möglichkeit geschaffen werden, ein Fahrzeug ohne aktive Fahrwerksbeeinflussungsvorrichtung nachträglich durch Umrüsten des erfindungsgemäßen Fahrschemels mit einer aktiven Fahrwerksbeeinflussungsvorrichtung zu versehen.

Allerdings ist es erfindungsgemäß nicht ausgeschlossen, die Quertraverse unlösbar und/oder stoffschlüssig, beispielsweise durch Schweißen, mit den Seitenträgern zu verbinden.

Die Fahrschemelkomponenten, die jeweils zwei mittels einer Primärquertraverse verbundene Seitenträger aufweisen, können in der Weise hergestellt werden, dass die Primärquertraverse mit den Seitenträgern unlösbar, beispielsweise durch Schweißen, verbunden wird. Eine solche Ausführung ist besonders robust und kostengünstig herstellbar.

Es ist alternativ allerdings nicht ausgeschlossen, die Primörquertraverse lösbar, beispielsweise mittels Schrauben, mit den Seitenträgern zu verbinden. Bei einer besonders robusten Ausführung wird die Primärquertraverse gemeinsam einstückig mit den Seitenträgern hergestellt. Es ist vorteilhaft auch möglich, dass Teile der Primärquertraverse gemeinsam einstückig mit Teilen der Seitenträger hergestellt, insbesondere aus denselben Stücken Ausgangsmaterials, hergestellt werden.

Wie bereits erwähnt ist bei einer ganz besonders vorteilhaften Ausführung vorgesehen, dass die Fahrschemelkomponente außer der Primärquertraverse keine weitere Quertraverse aufweist, die die Seitenträger verbindet. Alternativ und insbesondere zusätzlich kann vorteilhaft vorgesehen sein, dass außer der Quertraverse keine weitere Quertraverse, die die Seitenträger verbindet, an einer solchen Fahrschemelkomponente befestigt wird. Hierdurch wird vorteilhaft erreicht, dass der Fahrschemel ohne weitere stabilisierende Quertraversen auskommt und der Bauraum für zusätzliche Quertraversen eingespart werden kann.

Die in der ersten Art von Quertraversen angeordnete Komponente einer aktiven Fahrwerksbeeinflussungsvorrichtung kann beispielsweise einen elektrischen Antriebsmotor und/oder ein Getriebe, insbesondere ein dem Antriebsmotor triebtechnisch nachgeschaltetes Getriebe aufweisen. Das Getriebe kann vorteilhaft insbesondere als Spannungswellengetriebe ausgebildet sein. Insbesondere kann ein Circularspline oder ein Dynamicspline des Spannungswellengetriebes drehfest, insbesondere unmittelbar, mit der Quertraverse der ersten Art verbunden sein. Die in der ersten Art von Quertraversen angeordnete Komponente kann auch ein Aktuator sein, der einen Antriebsmotor und insbesondere ein triebtechnisch nachgeschaltetes Getriebe aufweist.

Die in der ersten Art von Quertraversen angeordnete Komponente einer aktiven Fahrwerksbeeinflussungsvorrichtung kann alternativ oder zusätzlich eine Drehmomentübertragungsvorrichtung, insbesondere wenigstens einen Torsionsstab, aufweisen. Dies insbesondere auch, wenn die Fahrwerksbeeinflussungsvorrichtung als radselektive Fahrwerksbeeinflussungsvorrichtung ausgebildet ist, bei der jedem Rad ein eigener Aktuator zugeordnet ist. Mittels einer Drehmomentübertragungsvorrichtung kann nämlich vorteilhaft erreicht werden, dass sich die Aktuatoren der unterschiedlichen Fahrzeugseiten gegenseitig unmittelbar beeinflussen, beispielsweise um zusätzlich zu den Möglichkeiten einer aktiven Steuerung ein Kopierverhalten wie bei einem klassischen, passiven Stabilisator zu erreichen.

Ganz allgemein kann vorteilhaft vorgesehen sein, dass die Fahrwerksbeeinflussungsvorrichtung als radselektive Fahrwerksbeeinflussungsvorrichtung ausgebildet ist, bei der jedem Rad ein eigener Aktuator zugeordnet ist, so dass beispielsweise der Höhenstand eines Rades relativ zur Karosserie unabhängig von der Einstellung des Höhenstandes bei einem anderen Rad, insbesondere unabhängig vom Höhenstand des Rades derselben Fahrzeugachse, eingestellt werden kann. Die Fahrwerksbeeinflussungsvorrichtung kann alternativ zu einer radselektiven Ausführung auch in der Weise ausgebildet sein, dass den Rädern einer Fahrzeugachse ein gemeinsamer Aktuator zugeordnet ist.

Die aktive Fahrwerksbeeinflussungsvorrichtung kann vorteilhaft insbesondere derart ausgebildet sein, dass ein an eine linke Radaufhängung anzukoppelnder Aktuator einen linken Antriebsmotor und ein dem linken Antriebsmotor triebtechnisch nachgeschaltetes linkes Getriebe aufweist, dessen Getriebeabtrieb dazu ausgebildet und bestimmt ist, mit einer linken Radaufhängung einer Fahrzeugachse verkoppelt zu werden, und dass ein rechter Aktuator einen rechten Antriebsmotor und ein dem rechten Antriebsmotor triebtechnisch nachgeschaltetes rechtes Getriebe aufweist, dessen Getriebeabtrieb dazu ausgebildet und bestimmt ist, mit einer rechten Radaufhängung einer Fahrzeugachse verkoppelt zu werden. Beispielsweise ist es möglich, eine Kopplung der linken Radaufhängung mit der rechten Radaufhängung durch eine drehmomentübertragende Verbindung zwischen dem linken Getriebeabtrieb des linken Aktuators und dem rechten Getriebeabtrieb des rechten Aktuators zu erreichen. Insoweit kann beispielsweise vorgesehen sein, dass der Getriebeabtrieb des linken Getriebes mittels der Drehmomentübertragungsvorrichtung mit dem Getriebeabtrieb des rechten Getriebes drehmomentübertragend verbunden oder verbindbar ist.

Eine solche Ausführung hat jedoch den Nachteil, dass das Reibmoment überwunden werden muss, welches durch das jeweils über die Drehmomentübertragungsvorrichtung getriebene Getriebe erzeugt wird. Das Reibmoment ist abhängig von der Untersetzung des Getriebes gleichzeitig eine Funktion der Massenträgheiten der zu beschleunigenden Komponenten des Getriebes sowie der Überwindung des Reibmomentes des Zahneingriffes. Aus diesen Gründen ist die Übertragung sehr großer Drehmomente zwischen den Aktuatoren nötig, wenn die Getriebeabtriebe mittels Drehmomentübertragungsvorrichtung drehmomentübertragend verbunden sind, da vor dem Zurücktreiben ggf. ein koppelnder Torsionsstab verdrillt wird und erst beim Erreichen eines Losbrechmomentes der über die Drehmomentübertragungsvorrichtung getriebene Aktuator reagiert. Hierdurch kann es beispielsweise zu einem Überschwingen des getriebenen Aktuators kommen, was allerdings durch regelungstechnische Eingriffe bei der Ansteuerung der Aktuatoren reduziert werden kann.

Der erwähnte Nachteil ist allerdings vermieden, wenn ein Abtrieb des linken Antriebsmotors oder ein Getriebeantrieb des linken Getriebes mittels einer Drehmomentübertragungsvorrichtung mit einem Abtrieb des rechten Antriebsmotors oder einem Getriebeantrieb des rechten Getriebes drehmomentübertragend verbunden ist. Daher kann vorteilhaft vorgesehen sein, dass die Drehmomentübertragungsvorrichtung (ggf. abgesehen von dem linken und dem rechten Getriebeantrieb) keine weiteren Bauteile der Getriebe der Aktuatoren beinhaltet. Durch die Kopplung der schnellen Getriebeseiten der Aktuatoren wird vorteilhaft außerdem erreicht, dass der Umfang von Regelungseingriffen, etwa zur Reduktion des Losbrechmomentes oder des Überschwingens, zumindest deutlich reduziert ist.

Die Drehmomentübertragungsvorrichtung kann vorteilhaft eine selbstschaltende oder schaltbare Kupplung beinhalten, mittels der eine drehmomentübertragende Verbindung zwischen einem linken Aktuator und einem rechten Aktuator unterbrochen und nach einer Unterbrechung wieder geschlossen werden kann.

Alternativ oder zusätzlich kann auch vorgesehen sein, dass die in der ersten Art von Quertraversen angeordnete Komponente eine elektronische Steuerungsvorrichtung aufweist. Die elektronische Steuerungsvorrichtung kann insbesondere dazu eingerichtet sein, einen oder mehrere Aktuatoren und/oder eine Drehmomentübertragungsvorrichtung und/oder eine Kupplung einer Drehmomentübertragungsvorrichtung, insbesondere fahrsituationsabhängig und/oder vorausschauend und/oder in Abhängigkeit von einem Neigungswinkel des Fahrzeugs und/oder unter Berücksichtigung der Messwerte eines Beschleunigungssensors zu steuern oder zu regeln.

Bei einer besonderen Ausführung wird wenigstens eine Komponente der aktiven Fahrwerksbeeinflussungsvorrichtung durch die Quertraverse, insbesondere vollständig, eingehaust. Auf diese Weise wird vorteilhaft erreicht, dass die Komponente wirkungsvoll gegen Beschädigung und Verschmutzung geschützt ist.

Die eingefügte Quertraverse kann, bezogen auf die Einbauausrichtung in einem Fahrzeug, insbesondere eine hintere Quertraverse des Fahrschemels sein, während die Primärquertraverse bezogen auf die Einbauausrichtung in einem Fahrzeug eine vordere Quertraverse bildet. Dies insbesondere, wenn der Fahrschemel als ein vorderer Fahrschemel eines Fahrzeugs ausgebildet ist.

Von besonderem Vorteil ist ein Fahrschemel, der nach dem erfindungsgemäßen Verfahren hergestellt ist.

Insbesondere ist ein Fahrschemel für ein Kraftfahrzeug vorteilhaft, der eine Quertraverse aufweist, die zwei Seitenträger verbindet und die als Hohlkörper ausgebildet ist, in dem wenigstens eine Komponente einer aktiven Fahrwerksbeeinflussungsvorrichtung angeordnet ist. Insbesondere ist ein Fahrschemel für ein Kraftfahrzeug vorteilhaft, der eine Primärquertraverse und eine Quertraverse aufweist, die jeweils zwei Seitenträger verbinden, wobei die Quertraverse als Hohlkörper ausgebildet ist, in dem wenigstens eine Komponente einer aktiven Fahrwerksbeeinflussungsvorrichtung angeordnet ist.

Ein solcher Fahrschemel hat den besonderen Vorteil, dass Bauraum eingespart werden kann, weil die in der Quertraverse angeordneten Komponenten der aktiven Fahrwerksbeeinflussungsvorrichtung nicht separat außerhalb des Fahrschemels angebracht werden müssen. Außerdem sind die in der Quertraverse angeordneten Komponenten der aktiven Fahrwerksbeeinflussungsvorrichtung, wie bereits erwähnt, wirkungsvoll gegen Beschädigung und Verschmutzung geschützt.

Die aktive Fahrwerksbeeinflussungsvorrichtung kann insbesondere zur Wank- und/oder Nickstabilisierung eines Fahrzeuges ausgebildet sein. Vorzugsweise weist der Fahrschemel außer der Primärquertraverse und der Quertraverse keinen weiteren Träger, insbesondere keine weitere Quertraverse, auf, der die Seitenträger verbindet. Hierdurch wird vorteilhaft erreicht, dass der Fahrschemel ohne weitere stabilisierende Quertraversen auskommt und der Bauraum für zusätzliche Quertraversen eingespart werden kann. Es ist allerdings auch möglich, dass die Seitenträger ausschließlich mittels der Quertraverse verbunden sind.

Bei einer besonders robusten und dennoch kompakten Ausführung weist der Fahrschemel die Form eines innen offenen Rechtecks oder Trapezes oder Quadrats oder Kreises oder eine U-Form auf.

Von besonderem Vorteil ist ein Fahrwerk, das wenigstens einen erfindungsgemäßen Fahrschemel beinhaltet. Ein solches Fahrwerk ist besonders bauraumsparend einsetzbar, weil die in der Quertraverse angeordneten Komponenten der aktiven Fahrwerksbeeinflussungsvorrichtung nicht separat außerhalb des Fahrschemels angebracht werden müssen. Insbesondere kann das Fahrwerk einen erfindungsgemäß hergestellten vorderen und einen erfindungsgemäß hergestellten hinteren Fahrschemel aufweisen.

Ebenfalls von besonderem Vorteil ist ein Fahrzeug, insbesondere Kraftfahrzeug, das wenigstens einen erfindungsgemäßen Fahrschemel aufweist. Das Fahrzeug kann insbesondere ein Personenkraftwagen oder ein Lastkraftwagen sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch ein erstes Ausführungsbeispiel eines gemäß dem erfindungsgemäßen Verfahren hergestellten Fahrschemels, der für ein Fahrzeug mit aktivem Fahrwerk ausgebildet ist,
- Fig. 2: schematisch ein zweites Ausführungsbeispiel eines gemäß dem erfindungsgemäßen Verfahren hergestellten Fahrschemels, der für ein Fahrzeug ohne aktives Fahrwerk ausgebildet ist,
- Fig. 3: schematisch ein drittes Ausführungsbeispiel eines gemäß dem erfindungsgemäßen Verfahren hergestellten Fahrschemels, der für ein Fahrzeug ohne aktives Fahrwerk ausgebildet ist,
- Fig. 4: eine schematische Illustration zur Veranschaulichung eines Ausführungsbeispiels des erfindungsgemäßen Verfahrens, wobei ein Fahrschemel für ein Fahrzeug mit aktivem Fahrwerk hergestellt wird, und
- Fig. 5: die schematische Illustration zur Veranschaulichung des Ausführungsbeispiels des erfindungsgemäßen Verfahrens, wobei ein Fahrschemel für ein Fahrzeug ohne aktives Fahrwerk hergestellt wird.

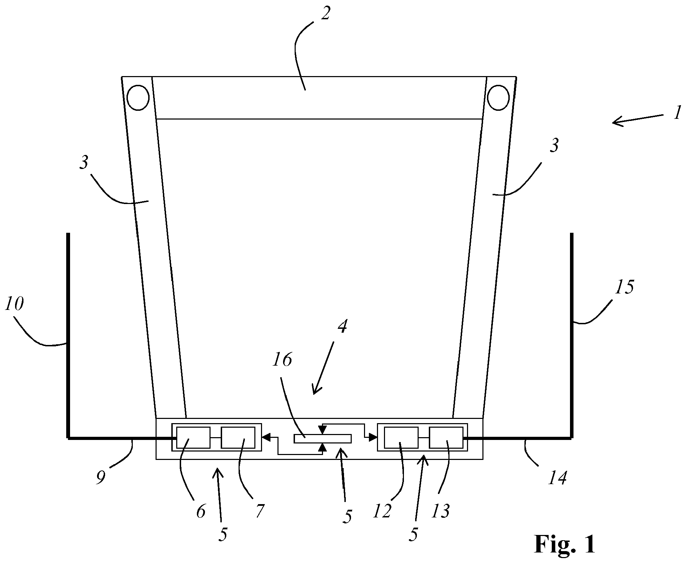

Fig. 1 zeigt ein erstes Ausführungsbeispiel eines gemäß dem erfindungsgemäßen Verfahren hergestellten Fahrschemels, der für ein Fahrzeug mit aktivem Fahrwerk ausgebildet ist.

Der Fahrschemel weist eine Fahrschemelkomponente 1 auf, die zwei mittels einer Primärquertraverse 2 verbundene Seitenträger 3 aufweist. Der Fahrschemel weist außerdem eine Quertraverse 4 einer ersten Art auf, die als Hohlkörper ausgebildet ist, in dem mehrere Komponenten 5 einer aktiven Fahrwerksbeeinflussungsvorrichtung angeordnet sind. Die Quertraverse 4 ist mittels (nicht näher dargestellten) Schraubverbindungen mit der Fahrschemelkomponente 1 verbunden.

In der Quertraverse 4 ist ein linker Aktuator 6 angeordnet, der einen linken elektrischen Antriebsmotor 7 und ein dem linken Antriebsmotor 7 triebtechnisch nachgeschaltetes linkes Getriebe 8 beinhaltet. Der Getriebeabtrieb 9 des linken Getriebes 8 ist drehfest mit einem Hebelarm 10 verbunden, der dazu bestimmt ist, gelenkig mit einer (in dieser Figur nicht dargestellten) linken Radaufhängung, insbesondere einem Querlenker einer linken Radaufhängung verbunden zu werden.

In der Quertraverse 4 ist außerdem ein rechter Aktuator 11 angeordnet, der einen rechten elektrischen Antriebsmotor 12 und ein dem rechten Antriebsmotor 7 triebtechnisch nachgeschaltetes rechtes Getriebe 13 beinhaltet. Der Getriebeabtrieb 14 des rechten Getriebes 13 ist drehfest mit einem Hebelarm 15 verbunden, der dazu bestimmt ist, gelenkig mit einer (in dieser Figur nicht dargestellten) rechten Radaufhängung, insbesondere einem Querlenker einer rechten Radaufhängung verbunden zu werden.

In der Quertraverse 4 ist außerdem eine elektronische Steuerungsvorrichtung 16 angeordnet. Die elektronische Steuerungsvorrichtung 16 steuert den linken Aktuator 6 und den rechten Aktuator 11. Insbesondere kann vorteilhaft vorgesehen sein, dass die elektronische Steuerungsvorrichtung 16 die Aktuatoren fahrsituationsabhängig und/oder vorausschauend und/oder in Abhängigkeit von einem Neigungswinkel des Fahrzeugs und/oder unter Berücksichtigung der Messwerte eines Beschleunigungssensors steuert oder regelt, um beispielsweise eine Wank- und/oder eine Nickstabilisierung zu erreichen.

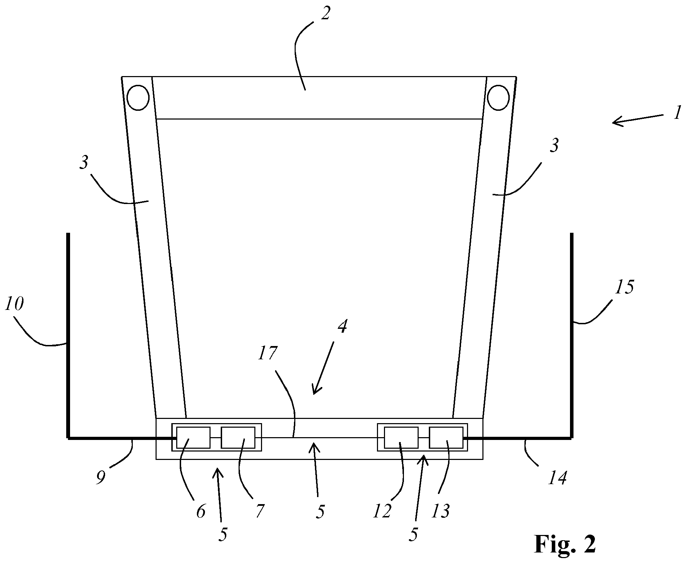

Fig. 2 zeigt ein zweites Ausführungsbeispiel eines gemäß dem erfindungsgemäßen Verfahren hergestellten Fahrschemels, der für ein Fahrzeug mit aktivem Fahrwerk ausgebildet ist.

Der Fahrschemel unterscheidet sich von dem in Figur 1 dargestellten Fahrschemel durch eine in der Quertraverse 4 angeordnete Drehmomentübertragungsvorrichtung 17, die den ersten Aktuator 6 und den zweiten Aktuator 11 drehmomentübertragend verbindet. Mittels der Drehmomentübertragungsvorrichtung 17 wird vorteilhaft erreicht, dass sich die Aktuatoren 6, 11 der unterschiedlichen Fahrzeugseiten gegenseitig beeinflussen, beispielsweise um zusätzlich zu den Möglichkeiten einer aktiven, individuellen Steuerung ein Kopierverhalten wie bei einem klassischen, passiven Stabilisator zu erreichen. Die Drehmomentübertragungsvorrichtung 17 kann eine (nicht dargestellte) schaltbare oder selbstschaltende Kupplung aufweisen, mittels der die drehmomentübertragende Verbindung vorübergehend unterbrochen werden kann.

Der Fahrschemel kann außerdem eine elektronische Steuerungsvorrichtung 16 beinhalten, die jedoch in Figur 2 der besseren Übersichtlichkeit halber nicht eingezeichnet ist.

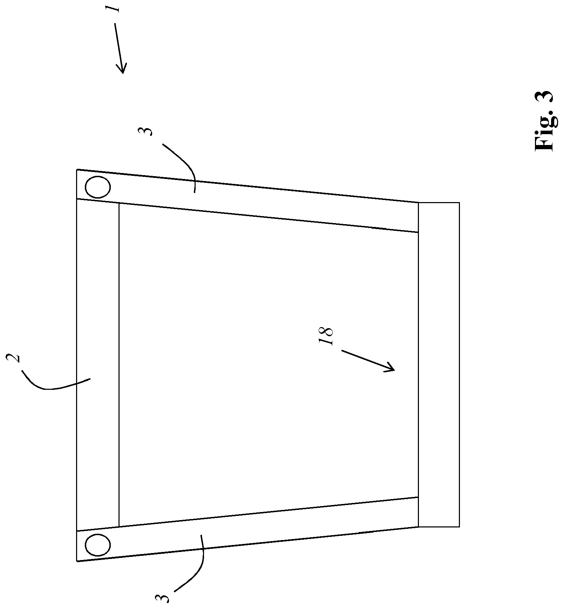

Fig. 3 zeigt ein drittes Ausführungsbeispiel eines bei der Ausführung des erfindungsgemäßen Verfahrens hergestellten Fahrschemels, der für ein Fahrzeug ohne aktives Fahrwerk ausgebildet ist.

Der Fahrschemel weist eine Fahrschemelkomponente 1 auf, die zwei mittels einer Primärquertraverse 2 verbundene Seitenträger 3 aufweist. Der Fahrschemel weist außerdem eine Quertraverse 18 einer zweiten Art auf, die keine Komponente 5 einer aktiven Fahrwerksbeeinflussungsvorrichtung aufweist. Diese Quertraverse 18 der zweiten Art wurde eingebaut, weil der Fahrschemel für ein Fahrzeug mit rein passivem Fahrwerk bestimmt ist.

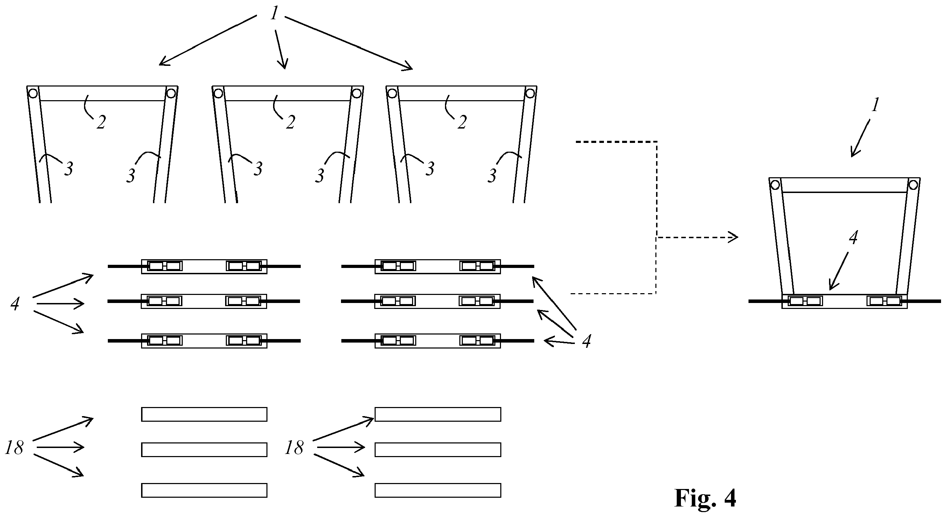

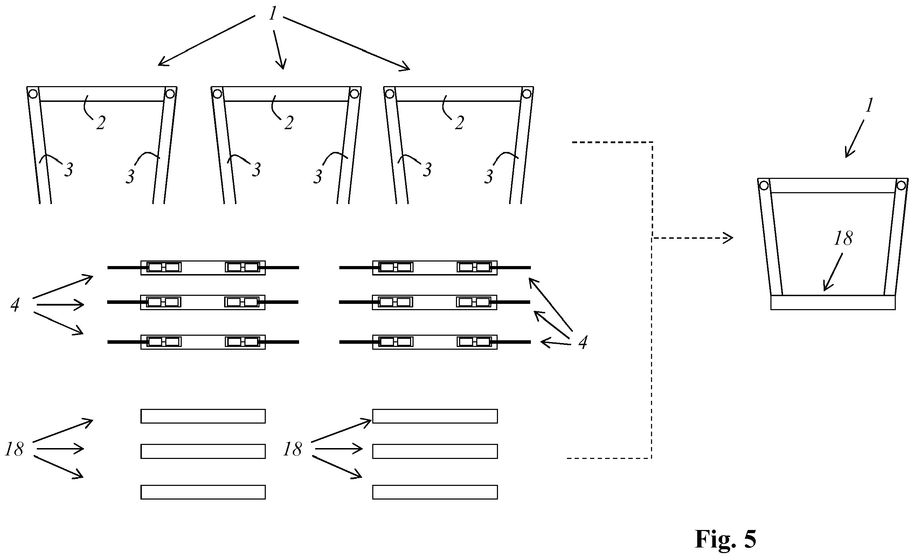

Die Figuren 4 und 5 zeigen jeweils eine schematische Illustration zur Veranschaulichung eines Ausführungsbeispiels des erfindungsgemäßen Verfahrens.

Das Verfahren beinhaltet das Herstellen von Fahrschemelkomponenten 1, die jeweils zwei mittels einer Primärquertraverse 2 verbundene Seitenträger 3 aufweisen.

Das Verfahren beinhaltet außerdem das Bereitstellen von Quertraversen 4, 18 zweier unterschiedlicher Arten, nämlich einer ersten Art von Quertraversen 4, die jeweils als Hohlkörper ausgebildet sind, in dem wenigstens eine Komponente 5 einer aktiven Fahrwerksbeeinflussungsvorrichtung angeordnet ist, und einer zweiten Art von Quertraversen 18, die keine Komponente 5 einer aktiven Fahrwerksbeeinflussungsvorrichtung aufweist.

Es wird eine der Quertraversen 4, 18 in jeweils eine der Fahrschemelkomponenten 1 derart eingebaut, dass die eingefügte Quertraverse 4, 18 ebenfalls die zwei Seitenträger 3 verbindet, wobei in Abhängigkeit davon, ob der Fahrschemel für ein Fahrzeug mit aktivem Fahrwerk oder für ein Fahrzeug mit rein passivem Fahrwerk bestimmt ist, entweder eine Quertraverse 4 der ersten Art eingefügt wird, was in Figur 4 dargestellt ist, oder eine Quertraverse 18 der zweiten Art eingefügt wird, was in Figur 5 dargestellt ist.

### Bezugszeichenliste:

- 1: Fahrschemelkomponente
- 2: Primärquertraverse
- 3: Seitenträger
- 4: Quertraverse der ersten Art
- 5: Komponente einer aktiven Fahrwerksbeeinflussungsvorrichtung
- 6: linker Aktuator
- 7: linker elektrischer Antriebsmotor
- 8: linkes Getriebe 8
- 9: Getriebeabtrieb des linken Getriebes 8
- 10: Hebelarm
- 11: rechter Aktuator
- 12: rechter elektrischer Antriebsmotor
- 13: rechtes Getriebe
- 14: Getriebeabtrieb des rechten Getriebes
- 15: Hebelarm
- 16: elektronische Steuerungsvorrichtung
- 17: Drehmomentübertragungsvorrichtung
- 18: Quertraverse der zweiten Art

## Patentansprüche

1. Verfahren zum Herstellen von Fahrschemeln, **gekennzeichnet durch** folgende Schritte:
a. Herstellen von Fahrschemelkomponenten, die jeweils zwei mittels einer Quertraverse verbindbare Seitenträger aufweisen,
b. Bereitstellen von Quertraversen zweier unterschiedlicher Arten, nämlich
i. einer ersten Art von Quertraversen, die jeweils als Hohlkörper ausgebildet sind, in dem wenigstens eine Komponente einer aktiven Fahrwerksbeeinflussungsvorrichtung angeordnet ist und
ii. einer zweiten Art von Quertraversen, die keine Komponente einer aktiven Fahrwerksbeeinflussungsvorrichtung aufweist,
c. Einfügen einer der Quertraversen in jeweils eine der Fahrschemelkomponenten derart, dass die eingefügte Quertraverse die zwei Seitenträger verbindet, wobei in Abhängigkeit davon, ob der Fahrschemel für ein Fahrzeug mit aktivem Fahrwerk oder für ein Fahrzeug mit rein passivem Fahrwerk bestimmt ist, entweder eine Quertraverse der ersten Art oder eine Quertraverse der zweiten Art eingefügt wird.

2. Verfahren nach Anspruch 1, **dadurch gekennzeichnet, dass**
a. die Seitenträger beim Herstellen der Fahrschemelkomponenten jeweils mittels einer Primärquertraverse verbunden werden, oder dass
b. die Seitenträger beim Herstellen der Fahrschemelkomponenten jeweils mittels einer Primärquertraverse verbunden werden, wobei die Fahrschemelkomponenten jeweils außer der Primärquertraverse keinen weiteren Träger, insbesondere keine weitere Quertraversen, aufweisen, die die Seitenträger verbinden.

3. Verfahren nach Anspruch 1 oder 2, **dadurch gekennzeichnet, dass** außer der Quertraverse keine weitere Quertraverse, die die Seitenträger verbindet, an der Fahrschemelkomponente befestigt wird.

4. Verfahren nach einem der Ansprüche 1 bis 3, **dadurch gekennzeichnet, dass** jeweils die Quertraverse mit der Fahrschemelkomponente durch Schraubverbindungen oder ausschließlich durch Schraubverbindungen verbunden wird.

5. Verfahren nach einem der Ansprüche 1 bis 4, **dadurch gekennzeichnet, dass** die Komponente einer aktiven Fahrwerksbeeinflussungsvorrichtung einen elektrischen Antriebsmotor und/oder ein Getriebe und/oder einen Aktuator und/oder eine elektronische Steuerungsvorrichtung und/oder eine Drehmomentübertragungsvorrichtung, insbesondere wenigstens einen Torsionsstab, aufweist.

6. Verfahren nach einem der Ansprüche 1 bis 5, **dadurch gekennzeichnet, dass** die Quertraverse die Komponente der aktiven Fahrwerksbeeinflussungsvorrichtung oder mehrere, Komponente der aktiven Fahrwerksbeeinflussungsvorrichtung, insbesondere vollständig, einhaust.

7. Verfahren nach einem der Ansprüche 2 bis 6, **dadurch gekennzeichnet, dass** die eingefügte Quertraverse bezogen auf die Einbauausrichtung in einem Fahrzeug eine hintere Quertraverse des Fahrschemels bildet, während die Primärquertraverse bezogen auf die Einbauausrichtung in einem Fahrzeug eine vordere Quertraverse des Fahrschemels bildet.

8. Fahrschemel für ein Kraftfahrzeug hergestellt mit einem Verfahren nach einem der Ansprüche 1 bis 7.

9. Fahrschemel nach Anspruch 8, **dadurch gekennzeichnet, dass** die zwei Seitenträger ausschließlich mittels der Quertraverse der ersten oder zweiten Art verbunden sind.

10. Fahrschemel nach Anspruch 8, **dadurch gekennzeichnet, dass** die zwei Seitenträger mittels der Quertraverse der ersten oder zweiten Art und mit einer Primärquertraverse verbunden sind.

11. Fahrschemel nach Anspruch 10, **dadurch gekennzeichnet, dass** der Fahrschemel außer der Primärquertraverse und der Quertraverse der ersten oder zweiten Art keinen weiteren Träger, insbesondere keine weitere Quertraverse, aufweist, der die Seitenträger verbindet.

12. Fahrschemel nach Anspruch 10 oder 11, **dadurch gekennzeichnet, dass** die Primärquertraverse mit den Seitenteilen nicht zerstörungsfrei lösbar verbunden ist, insbesondere verschweißt ist.

13. Fahrschemel nach einem der Ansprüche 8 bis 12, **dadurch gekennzeichnet, dass**
a. die Quertraverse der ersten oder zweiten Art durch Schraubverbindungen, insbesondere ausschließlich durch Schraubverbindungen, mit den Seitenträgern verbunden ist, und/oder dass
b. die als Hohlkörper ausgebildete Quertraverse eine hintere Quertraverse ist, und/oder dass
c. die in der als Hohlkörper ausgebildeten Quertraverse angeordnete Komponente einen elektrischen Antriebsmotor und/oder ein Getriebe und/oder einen Aktuator und/oder eine elektronische Steuerungsvorrichtung und/oder eine Drehmomentübertragungsvorrichtung, insbesondere wenigstens einen Torsionsstab, aufweist.

14. Fahrschemel nach einem der Ansprüche 8 bis 13, **dadurch gekennzeichnet, dass** der Fahrschemel die Form eines innen offenen Rechtecks oder Trapezes oder Quadrats oder Kreises oder eine U-Form aufweist.

15. Fahrzeug, insbesondere Kraftfahrzeug, Personenkraftwagen oder Lastkraftwagen, beinhaltend einen Fahrschemel nach einem der Ansprüche 8 bis 14.
